Europäisches Patentamt

European Patent Office

Office européen des brevets

(11) Numéro de publication: **0 230 803**
**B1**

(12) **FASCICULE DE BREVET EUROPEEN**

(45) Date de publication du fascicule du brevet:
30.08.89

(51) Int. Cl.⁴: **D04H 3/07**, **D04H 3/10**
// B29C67/14, D05B23/00

(21) Numéro de dépôt: **86402641.4**

(22) Date de dépôt: **27.11.86**

(54) Article textile multicouches pour la réalisation de matériaux stratifiés, procédé et dispositif pour son obtention.

(30) Priorité: **05.12.85 FR 8518054**

(43) Date de publication de la demande:
**05.08.87 Bulletin 87/32**

(45) Mention de la délivrance du brevet:
**30.08.89 Bulletin 89/35**

(84) Etats contractants désignés:
**AT BE CH DE ES GB GR IT LI LU NL SE**

(56) Documents cités:
**FR-A- 370 600**
**FR-A- 1 494 507**
**FR-A- 2 315 562**
**FR-A- 2 355 936**

(73) Titulaire: **BROCHIER S.A., 33 Avenue Franklin Roosevelt B.P. 272, F-69152 Décines Charpieu Cédex(FR)**

(72) Inventeur: **Bompard, Bruno, 23 rue de Montbrilland, F-69003 Lyon(FR)**
Inventeur: **Debaille, Christian, 43 C rue Pasteur, F-69300 Caluire(FR)**
Inventeur: **Bruyere, Alain, 33 rue Jean Moulin, F-38290 Villefontaine(FR)**

(74) Mandataire: **Phélip, Bruno et al, c/o Cabinet Harlé & Phélip 21, rue de La Rochefoucauld, F-75009 Paris(FR)**

ACTORUM AG

**Description**

La présente invention a trait à un nouveau type d'articles textiles multicouches utilisables pour la réalisation de matériaux stratifiés; elle concerne également un procédé ainsi qu'un dispositif permettant l'obtention d'un tel matériau.

Les matériaux stratifiés sont connus depuis fort longtemps et sont constitués par une alternance de couches de matière textile (tissus, nappes non tissées..) que l'on imprègne de résine, l'ensemble étant ensuite traité thermiquement afin de provoquer la polymérisation de ladite résine et le durcissement de l'ensemble.

Ces matériaux ont trouvé de nombreuses applications, soit sous la forme d'éléments plans (plaques), soit sous la forme d'éléments à surface de révolution, à génératrice rectiligne ou non, tel que tube, cône..

A ce jour, divers types de structures textiles multicouches ont été proposés pour réaliser de tels matériaux. Parmi ces structures, celle qui permet d'obtenir les meilleures caratéristiques mécaniques, une très bonne résistance aux chocs, à l'abrasion.. présente la caractéristique de comporter des fils orientés selon trois directions différentes, généralement perpendiculaires entre elles. De tels articles textiles sont couramment désignés par l'expression "tissus tridimensionnels", expression qui sera utilisée dans la suite de la description.

De tels tissus tridimensionnels peuvent être obtenus de diverses manières, les procédés les plus répandus consistant à former d'abord une structure bidirectionnelle en empilant successivement soit des nappes formées de fils parallèles, soit des tissus tissés. Les nappes sont superposées en les entrecroisant de manière à obtenir de bonnes caractéristiques mécaniques dans toutes les directions, la troisième direction étant obtenue par la liaison par couture, selon une direction perpendiculaire ou oblique par rapport au plan des nappes superposées.

Si un tel mode de liaison par couture qui permet de former la troisième direction du tissu tridimensionnel peut être facilement mis en oeuvre lorsque l'on souhaite réaliser des articles plans, il n'en n'est pas de même en ce que concerne la fabrication de pièces en tissu tridimensionnelles, ayant la forme de volume de révolution, par exemple des pièces cylindriques, des pièces en forme de cône ...

Diverses techniques ont été proposées pour réaliser de tels articles.

Parmi ces techniques, on peut citer celle faisant l'objet du FR-A-2 315 562 et qui, d'une manière générale, consiste à réaliser autour d'un mandrin support de forme correspondant à celle de la pièce à obtenir, une superposition de nappes de fils dits longitudinaux s'étendant selon une première direction et de nappes de fils dits transversaux circonférentiels parallèles s'étendant selon une direction différente de celle des fils dans la première série de nappes, la superposition étant réalisée de préférence selon une succession alternée de nappes de la première puis de la seconde séries, cet empilement de nappes étant lié par une troisième série de fils, dits radiaux et qui sont constitués de coutures parallèles, régulièrement espacées les unes des autres, et disposées en général selon les génératrices de la pièce. Une telle technique exige pour sa mise en oeuvre un appareil complexe, notamment en ce qui concerne la réalisation des mandrins support qui doivent être conçus de manière à pouvoir ménager sur leur surface des lacunes suffisantes destinées au passage de l'aiguille lors de la couture par le fil de la troisième direction. Lors de la réalisation des coutures parallèles, il convient de faire tourner pas à pas le mandrin support et, à chaque fois, une lacune doit se trouver en dessous de la tête de tricotage. On conçoit donc aisément qu'il n'est pas possible, grâce à un tel procédé, de faire varier facilement la densité des coutures, étant donné que leur espacement est en général constant.

De plus, dans une telle technique, il n'est pratiquement pas envisageable de réaliser des couches élémentaires de l'empilement à partir de tissus bidirectionnels.

Pour résoudre ce problème de la complexité du man drin support, il a été proposé, dans le FR-A-2 355 936 de réaliser l'empilement des nappes (constituées de fils parallèles ou de tissus bidimensionnels) sur un support en matériau pyrolysable, et ensuite à effectuer la couture de l'empilement desdites nappes et du support par le fil s'étendant selon la troisième direction. Le support est ensuite éliminé par traitement thermique. Un tel processus permet de surmonter les problèmes posés par l'utilisation d'un mandrin support présentant des lacunes comme dans FR-A-2 315 562, mais en revanche, les coutures sont toujours également faites parallèlement aux génératrices. Par ailleurs, la réalisation de la couture s'en trouve compliquée étant donné qu'il est nécessaire de prendre certains précautions pour que les fils de couture se nouent dans l'épaisseur des supports si l'on ne veut pas avoir une formation de boucles à l'intérieur de la pièce après élimination par pyrolyse desdits supports.

Or on a trouvé, et c'est ce qui fait l'objet de la présente invention, un nouveau type d'articles textiles multicouches tridimensionnels qui permet de réaliser des articles en forme (cube, cône..) présentant de très grandes caractéristiques mécaniques et qui, par ailleurs, peut être obtenu par un procédé beaucoup plus simple et sûr à mettre en oeuvre que les procédés antérieurs. Ledit procédé fait également partie de l'invention.

D'une manière générale, l'invention concerne donc un nouveau matériau textile multicouches pour la réalisation d'un article stratifié du type selon lequel chaque couche est constituée par un tissu bidirectionnel, lesdites couches étant liées entre elles par un troisième fil s'étendant selon une direction faisant un angle donné par rapport au plan formé par la direction des fils dans les différentes couches et se caractérise par le fait que ledit troisième fil forme une couture continue, ladite couture s'étendant d'une extrémité à l'autre de l'empilement sous la forme d'une hélice.

Le matériau selon l'invention peut se présenter sous différentes formes, par exemple d'un cylindre, d'un cône, la combinaison d'un cylindre et d'un cône ...Bien entendu, d'autres formes plus complexes pouraient être réalisées sans sortir du cadre de l'invention.

Par ailleurs, la couture en forme d'hélice peut être réalisée soit de manière à avoir un pas constant sur toute la longueur de l'article, soit éventuellement en faisant varier ce pas. Il est donc possible, en fonction de la forme de la pièce à réaliser, de modifier à volonté la densité des fils de la troisième direction constituée par la couture.

L'invention concerne également un procédé permettant la réalisation d'un tel article tridimensionnel ainsi qu'une installation permettant la mise en oeuvre de ce procédé, procédé qui se caractérise essentiellement par le fait que l'on réalise un empilement de couches de tissus bidirectionnels autour d'un mandrin fixe ayant la forme de la section interne de l'article à réaliser, ledit empilement étant formé sur deux couronnes le maintenant tendu par chacune de ses extrémités de telle sorte qu'il puisse être entraîné en rotation autour du mandrin précité, la liaison par couture étant obtenue au moyen d'un ensemble fixe par rapport au mandrin.

L'invention et les avantages qu'elle apporte seront illustrés grâce à l'exemple de réalisation donné ci-après à titre indicatif mais non limitatif, en référence aux dessins annexés dans lesquels :

- la figure 1 est une vue schématique en perspective d'un tissu tridimensionnel réalisé conformément à l'invention;
- la figure 2 est une vue schématique en perspective, éclatée d'une installation permettant la réalisation d'un tel tissu;
- la figure 3 est une coupe longitudinale d'une telle installation montrant la manière dont est réalisée la couture au travers de l'empilement de tissus bidirectionnels.

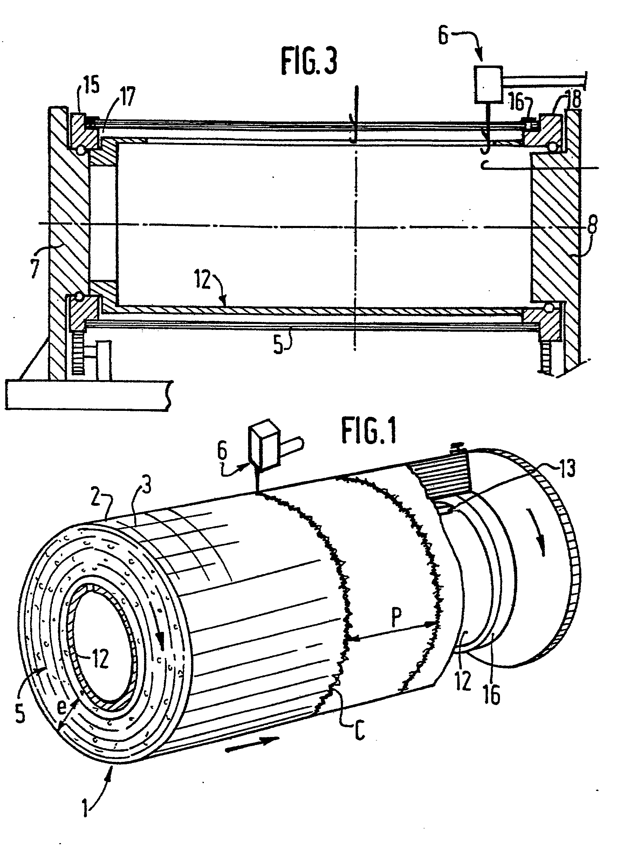

Si l'on se reporte aux dessins annexés et plus particulièrement à la figure 1, le matériau tridimensionnel conforme à l'invention se présente sous la forme d'un corps de révolution, par exemple d'un cylindre (1) constitué par la superposition d'une pluralité de nappes textiles comportant des fils (2) disposés circonférentiellement et des fils (3) disposés selon les génératrices de la pièces. Les couches élémentaires comportant ces fils selon deux directions seront avantageusement constitués par un tissu. La troisième direction est obtenue par une couture (C) qui traverse l'empilement préalablement formé, ladite couture se caractérisant selon l'invention par le fait qu'elle est continue et se présente sous la forme d'une spirale s'étendant d'une extrémité à l'autre de la pièce.

Le pas P de la couture sera réglé en fonction de la pièce à réaliser et peut varier sur la longueur de la pièce.

Si dans la description, l'invention est décrite pour la réalisation d'un tissu tridimensionnel cylindrique, il est évident que cela n'est pas limitatif.

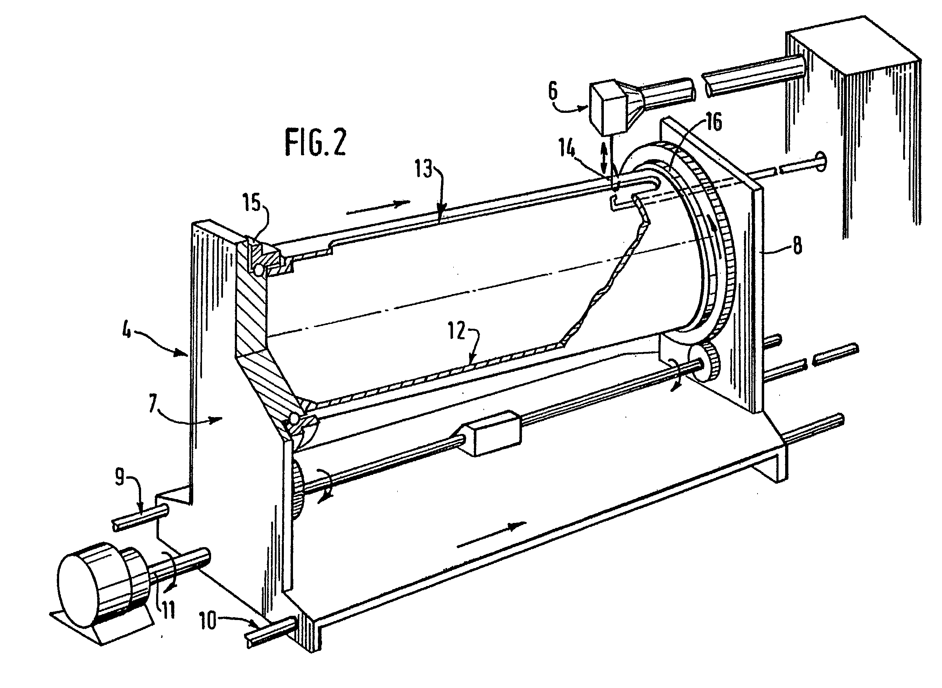

Pour réaliser un tel cylindre, on utilise une installation du type faisant l'objet des figures 2 et 3, et qui est constituée essentiellement par un chariot (4) sur lequel est réalisé l'empilement (5) de tissus bidirectionnels et qui est déplacé en regard d'une tête de couture (6) destinée à assurer la liaison des différentes couches et la formation de la troisième direction de fils. La tête de couture (6) peut avoir la structure de fonctionner d'une manière similaire à celle faisant l'objet du FR-A-2 315 562 et ne sera donc pas décrite en détail par mesure de simplification. Concernant le chariot (4), il est constitué essentiellement d'un bâti comportant deux montants (7, 8) montés déplaçables sur des glissières (9, 10) (ou système équivalent). Le déplacement du bâti (4) peut être obtenu au moyen d'un système à vis sans fin (11) commandé par un moteur (12). Ce déplacement sera effectué pas à pas en dessous de la tête de couture proprement dite et ce, en fonction du pas P de la couture C que l'on souhaite réaliser en hélice.

Afin de réaliser une telle couture en hélice, entre les deux montants (7, 8) du bâti, est monté fixe un man drin (12) dont la forme correspond à celle de la section interne de la pièce à réaliser et qui, dans le cas présent, est donc cylindrique. Un tel mandrin (12) est fixe et comporte une fente ou lacune (13) dans sa partie supérieure destinée à permettre le passage de l'aiguille (14) de couture. Conformément à l'invention, l'empilement de tissus (5) n'est pas réalisé autour du mandrin fixe (12) mais autour de deux couronnes d'extrémité (15, 16) entre lesquelles il est maintenu tendu. La fixation de l'enroulement sur les portées (17, 18) desdites couronnes (15, 16) est réalisée par tout moyen approprié, tel que par exemple au moyen de feuillards. Ces couronnes (15, 16) sont montées sur le bâti (4), et plus pariculièrement sur les montants (7, 8), de manière à pouvoir être entraînées en rotation, pas à pas, et ce d'une longueur correspondant à la longueur des mailles à réaliser. Conformément à l'invention, il est impératif que l'empilement formé puisse glisser pratiquement sans frottement autour du mandrin (12) qui, à la limite, pourrait même être supprimé et a cependant pour fonction de faciliter la réalisation de la couture.

En général, les portées (17, 18),des couronnes (15, 16) sont conçues de telle sorte qu'un léger vide subsiste entre le mandrin (12) et la couche inférieure de l'empilement (5), vide en général de l'ordre de 0,5 millimètre.

Grâce à un tel procédé et dispositif, il est donc possible, en synchronisant la rotation de l'empilement de tissus bidirectionnels et l'avance du chariot (4) portant ledit enroulement, de faire varier non seulement la longueur des mailles de la couture C mais également le pas P de la spirale formée par ladite couture.

Exemple :

Sur une installation du type précité, on réalise, par bobinage, un empilement (5) de tissus bidirectionnels, constitué de cinquante couches d'un tuban tissé ayant les caractéristiques suivantes:
- contexture chaîne et trame: fils de verre EC 13/300 tex/1383/Z20;

- armure de point satin de 8 comportant dix fils de chaîne et dix fils de trame du type précité;
- largeur du ruban : 150 millimètres;
- largeur des lisières : dix millimètres;
- épaisseur du tissu : 40/100ème de millimètre.

On enroule cinquante couches d'un tel ruban autour des portées (17, 18) des deux couronnes (15, 16) en prenant soin en bien le maintenir en tension. L'empilement formé a une épaisseur de vingt millimètres, le diamètre interne de l'enroulement étant de 120 millimètres.

Le blocage des extrémités du ruban est réalisé au niveau des portées (17, 18) des couronnes (15, 16), par exemple au moyen d'un feuillard.

Cet enroulement étant réalisé, conformément à l'invention, on lie les différentes couches entre elles au moyen d'une couture continue s'étendant d'une extrémité à l'autre dudit enroulement. Pour ce faire, le chariot (4) est amené en position reculée de telle sorte que la tête de tricotage réalise le premier point de couture au niveau de l'extrémité de la fente (13) proche de la première couronne (16). La liaison est réalisée au moyen d'un fil de verre EC9/130 tex (68/2) / F 150/1583.

Les déplacements du chariot (4) qui permettent de déterminer le pas P de l'hélice ainsi que la valeur de la rotation des couronnes (15, 16) seront réglés de manière à avoir un pas P de six millimètres et une longueur de mailles de 6,28 millimètres.

Par rapport aux articles similaires réalisés antérieurement au moyen de coutures continues mais parallèles aux génératrices de la pièce à réaliser, un tel procédé permet de travailler en continu. De plus, une telle liaison des couches par une couture en hélice permet d'obtenir un article beaucoup plus homogène car il n'y a aucun compactage de l'empilement lors de la réalisation de la couture.

Enfin, il est possible, notamment lorsque l'on souhaite réaliser d'une manière similaire des pièces de forme conique ou à génératrices complexes, de faire varier le pas de la couture, donc d'adapter la densité des fils radiaux formés par les coutures aux caractéristiques du produit.

Bien entendu, l'invention n'est pas limitée à l'exemple de réalisation donné précédemment. Ainsi, par exemple, il pourrait être envisagé de réaliser l'empilement de matériaux bidirectionnels non pas à partir de tissus plats mais à partir de manchons cylindriques ou coniques.

**Revendications**

1. Article textile multicouches en forme pour la réalisation de matériaux stratifiés du type selon lequel chaque couche est constituée par un tissue bidirectionnel, lesdites couches étant liées entre elles par un troisième fil s'étendant selon une direction formant un angle donné par rapport au plan formé par la direction des fils dans les différentes couches, caractérisé par le fait que ledit troisième fil forme une couture (C) continue, ladite couture s'étendant d'une extrémité à l'autre de l'article selon la forme d'une hélice.

2. Article textile selon la revendication 1, caractérisé par le fait que la couture (C) en forme d'hélice est réalisée soit de manière à avoir un pas constant sur toute la longueur de l'article, soit éventuellement en faisant varier ce pas.

3. Procédé pour la réalisation d'un article textile multicouches selon l'une des revendications 1 ou 2, caractérisé par le fait que l'on réalise un empilement (5) de couches de tissus bidirectionnels autour d'un mandrin fixe (12) ayant la forme de la section interne de l'article à réaliser, ledit empilement (5) étant formé sur deux couronnes (15, 16) le maintenant tendu par chacune de ses extrémités de telle sorte qu'il puisse être entraîné en rotation autour du mandrin précité, la liaison par couture étant obtenue au moyen d'un ensemble fixe par rapport audit mandrin, l'aiguille passant dans une ouverture (13) prévue dans ce mandrin, qui est déplacé pas à pas en dessous de la tête de couture (6).

4. Dispositif pour la mise en oeuvre du procédé selon la revendication 3, pour l'obtention d'un article textile multicouches selon l'une des revendications 1 et 2, caractérisé par le fait qu'il est constitué essentiellement par un chariot (4) sur lequel est réalisé l'empilement (5) des tissus bidirectionnels et qui est déplacé en regard d'une tête de couture (6) destinée à assurer la liaison des différentes couches et la formation de la troisième direction de fil, ledit chariot (4) étant déplaçable pas à pas en dessous de la tête de couture (6) et l'empilement (5) de tissus bidirectionnels étant maintenu sur deux couronnes (15, 16) montées rotatives sur les deux montants (7, 8) du bâti du chariot (4), ledit enroulement (5) de matière entourant un mandrin fixe (12) comportant une lumière (13) disposée en regard de la tête de couture (6) de sorte qu'il puisse être déplacé autour de ce mandrin sans aucun frottement avec celui-ci .

**Patentansprüche**

1. Mehrschichtiger, textiler, geformter Gegenstand zur Herstellung von Schichtmaterialien, wobei jede Schicht von einem in zwei Richtungen orientierten Gewebe gebildet wird, wobei diese Schichten durch einen dritten Faden miteinander verbunden sind, der sich in einer Richtung erstreckt, die einen vorgegebenen Winkel bildet im Verhältnis zu der Ebene, die durch die Richtung der Fäden in den verschiedenen Schichten gebildet wird, dadurch gekennzeichnet, daß der dritte Faden eine fortlaufende Naht (C) bildet, die sich von einem bis zum anderen Ende des Gegenstandes erstreckt in Form einer Schraubenlinie.

2. Textiler Gegenstand nach Anspruch 1, dadurch gekennzeichnet, daß die Naht (C) in Form einer Schraubenlinie hergestellt wird entweder durch einen konstanten Schritt über die gesamte Länge des Gegenstandes oder eventuell durch Variieren dieses Schritte.

3. Verfahren zur Herstellung eines mehrschichtigen, textilen Gegenstandes nach einem der Ansprüche 1 oder 2, dadurch gekennzeichnet, daß ein Stapel (5) aus in zwei Richtungen orientierten Stoffschichten um einen festen Dorn (12) gebildet wird, der die Form des inneren Abschnitts des herzustellenden Gegenstandes aufweist, wobei der Stapel (5) auf zwei Rädern (15, 16) geformt wird, die ihn gespannt halten an jedem seiner beiden Enden, so daß er in Rotation um den Dorn gebracht werden kann, wobei man die Verbindung durch die Naht mittels einer gegenüber dem Dorn festen Anordnung erhält und die Nadel in eine im Dorn vorgesehene Öffnung (13) eingreift, der Schritt für Schritt unter den Nähkopf (6) verschoben wird.

4. Vorrichtung für den Einsatz des Verfahrens nach Anspruch 3, zur Herstellung eines mehrschichtigen, textilen Gegenstandes nach einem der Ansprüche 1 oder 2, dadurch gekennzeichnet, daß sie im wesentlichen durch einen Wagen (4) gebildet ist, auf dem ein Stapel (5) von in zwei Richtungen orientierten Geweben hergestellt ist, der gegenüber einem Nähkopf (6) verschoben wird, der dazu bestimmt ist, die Verbindung der verschiedenen Schichten und die Ausbildung der dritten Richtung des Fadens zu sichern, wobei der Wagen (4) Schritt für Schritt unter den Nähkopf (6) verschoben werden kann und der Stapel (5) aus in zwei Richtungen orientierten Geweben festgehalten wird über zwei Räder (15, 16), die drehbar auf den beiden Ständern (7, 8) des Gestells des Wagens (4) montiert sind, wobei die Wicklung (5) des Materials, das den festen Dorn (12) mit einem Schlitz (13) umgibt, so gegenüber dem Nähkopf (6) angeordnet ist, daß sie um den Dorn ohne Reibung verschoben werden kann.

**Claims**

1. Shaped multilayer textile article for the production of laminated materials of the type according to which each layer consists of a two-directional cloth, the said layers being joined together by a third thread extending in a direction forming a given angle to the plane formed by the direction of the threads in the various layers, wherein said third thread forms a continuous stitching (C), said stitching extending as a helix from one end of the article to the other.

2. Textile article according to claim 1, wherein the helical stitching (C) is produced so as to have a constant pitch over the entire length of the article, or eventually so as to have a variable pitch.

3. Process for the production of a multilayer textile article according to one of claims 1 or 2, comprising the step of producing a stack of layers of two-directional cloths around a stationary mandrel having the shape of the internal section of the article to be produced, the said stack being formed on two crown rings holding it stretched at each of its ends so that it may be driven in rotation around the above mentioned mandrel, the junction by stitching being produced by means of an assembly which is stationary in relation to the said mandrel, the needle entering an opening provided in this mandrel, which is moved stepwise below the stitching head.

4. Device for implementing the process according to claim 3, for producing a multilayer textile article according to one of claims 1 and 2, comprising a trolley on which there is produced the stack of two-directional cloths and which is moved opposite a stitching head intended to produce the junction of the various layers and the formation of the third thread direction, said trolley being movable stepwise under the stitching head and said stack of two-directional cloths being maintained on two crown rings mounted rotationally on the two uprights of the structural frame of the trolley, the winding of material surrounding a stationary mandrel comprising an opening arranged opposite the stitching head so that it may move without friction around this mandrel.

# FIG.3

# FIG.1

FIG.2

EP 0 230 803 B1